# EUROPÄISCHE PATENTSCHRIFT

(11) **EP 1 281 885 B1**
(45) Veröffentlichungstag und Bekanntmachung des Hinweises auf die Patenterteilung: **21.01.2004**
(21) Anmeldenummer: 01118300.1
(22) Anmeldetag: 31.07.2001
(51) Int. Cl.: F16F 1/12

(54) **Sicherungsring-Haltevorrichtung für Zugfedern**
Securing ring-fixing device for tension springs
Dispositif de fixation de ressort à tension par anneau de sécurité

(43) Veröffentlichungstag der Anmeldung: 05.02.2003
(73) Patentinhaber: GUTER, August, 88444 Ummendorf (DE)
(72) Erfinder: GUTER, August, 88444 Ummendorf (DE)
(74) Vertreter: Kiessling, Christian

(56) Entgegenhaltungen:
- EP-A- 0 721 070
- DE-A- 3 631 233
- GB-A- 1 582 444
- US-A- 4 549 859
- US-A- 5 620 170
- PATENT ABSTRACTS OF JAPAN vol. 014, no. 103 (M-0941), 26. Februar 1990 (1990-02-26) & JP 01 307530 A (NHK SPRING CO LTD), 12. Dezember 1989 (1989-12-12)

## Beschreibung

Die Erfindung betrifft eine Halterungs-Vorrichtung zum lösbaren Befestigen eines Trompetenendes einer helixförmigen Zugfeder an einer in einer Platte ausgebildeten Bohrung.

Halterungs-Vorrichtungen der eingangs genannten Art sind im Stand der Technik in Ausführungsformen bekannt, bei denen eine Halterung für ein Trompetenende einer helixförmigen Zugfeder integriert in eine Bohrung einer Platte ausgebildet ist. Für parallel anzubringende Zugfedern sind dabei z.B. aus der Patentschrift EP-A-0 721 070 Ausführungsformen bekannt, bei denen eine Mehrzahl entsprechender, mit Halterungen integriert ausgebildeter Bohrungen in entsprechenden Platten ausgebildet sind. Den bekannten Halterungs-Vorrichtungen ist dabei gemein, dass sie den Nachteil aufweisen, nur unter jeweils hohen Kosten in Einzelanfertigung herstellbar zu sein, da die Anordnung der entsprechenden Bohrungen je nach Einzelfall gesondert vorzunehmen ist und die Nach-Bearbeitung der Bohrungen zur Ausbildung einer entsprechenden Halterungs-Vorrichtung zeitaufwendig und daher kostenintensiv ist.

Aufgabe der Erfindung ist es deshalb, eine Halterungs-Vorrichtung zum lösbaren Befestigen eines Trompetenendes einer helixförmigen Zugfeder an einer in einer Platte ausgebildeten Bohrung zu schaffen, die mit einfachen Mitteln in hohen Stückzahlen kostengünstig herstellbar ist.

Für eine Halterungs-Vorrichtung der eingangs genannten Art wird diese Aufgabe dadurch gelöst, dass die Vorrichtung als mit einer hohlkonischen Innenfläche ausgebildeter, mit einer seitlichen Öffnung versehener Ring ausgebildet ist, wobei der Ring an einer seiner Stirnflächen eine Einrasteinrichtung aufweist, mittels derer er in eine in einer Platte ausgebildeten Bohrung lösbar einsetzbar ist.

Bevorzugte Ausführungsformen der Erfindung sind Gegenstand der Unteransprüche.

Bei der erfindungsgemäßen Halterungs-Vorrichtung wird durch das Merkmal, dass die Vorrichtung als mit einer hohlkonischen Innenfläche ausgebildeter, mit einer seitlichen Öffnung versehener Ring ausgebildet ist, wobei der Ring an einer seiner Stirnflächen eine Einrasteinrichtung aufweist, mittels derer er in eine in einer Platte ausgebildeten Bohrung lösbar einsetzbar ist, erreicht, dass eine Vorrichtung geschaffen ist, bei der ein lösbares Einsetzen in eine beliebige einer Mehrzahl von Bohrungen gewährleistet ist, so dass sich Kosteneinsparungen aus einer billigen Massenproduktion der Vorrichtungen ergeben, die in einfach ausgebildete, lediglich hohlzylindrisch geformte Bohrungen einzusetzen sind die ebenfalls sehr kostengünstig herstellbar sind, wobei die entsprechenden Bohrungen darüber hinaus auch für unterschiedliche vorgegebene Anwendungszwecke in jeweils spezifischer Anordnung ausführbar sind.

Gemäß einer ersten bevorzugten Ausführungsform der erfindungsgemäßen Vorrichtung ist vorgesehen, dass die Einrasteinrichtung als mit einer seitlichen Öffnung versehene hohlzylindrische Verlängerung des hohlkonischen Ringes ausgebildet ist, die unter Bildung eines Absatzes an einer Stirnseite des hohlkonischen Ringes vorgesehen ist.

Gemäß einer anderen bevorzugten Ausführungsform der erfindungsgemäßen Vorrichtung ist vorgesehen, dass die hohlzylindrische Verlängerung einstückig mit dem hohlkonischen Ring ausgebildet sind.

Gemäß einer weiteren bevorzugten Ausführungsform der erfindungsgemäßen Vorrichtung ist vorgesehen, dass die hohlkonischen Innenfläche in einem Winkel von 30° zur Längsachse der Vorrichtung stehend angeordnet ist.

Gemäß einer weiteren bevorzugten Ausführungsform der erfindungsgemäßen Vorrichtung ist vorgesehen, dass die Vorrichtung aus einem Metall, insbesondere nicht rostendem Stahl hergestellt ist. Alternativ kann die Vorrichtung auch aus einem Kunststoffmaterial hergestellt sein.

Die erfindungsgemäße Vorrichtung wird im folgenden anhand einer bevorzugten Ausführungsform erläutert, die in den Figuren der Zeichnung dargestellt ist. Darin zeigen:
- Fig.1: eine bevorzugte Ausführungsform des Rings der erfindungsgemäßen Vorrichtung in einer Querschnittsansicht;
- Fig.1A: die in Figur 1 dargestellte Ausführungsform des Rings der erfindungsgemäßen Vorrichtung in einer Draufsicht;
- Fig.2: eine mit Bohrungen ausgebildete Platte zur Verwendung mit der erfindungsgemäßen Vorrichtung, in einer Draufsicht;
- Fig.3: eine bevorzugte Ausführungsform der erfindungsgemäßen Vorrichtung in einer in einer Querschnittsansicht.

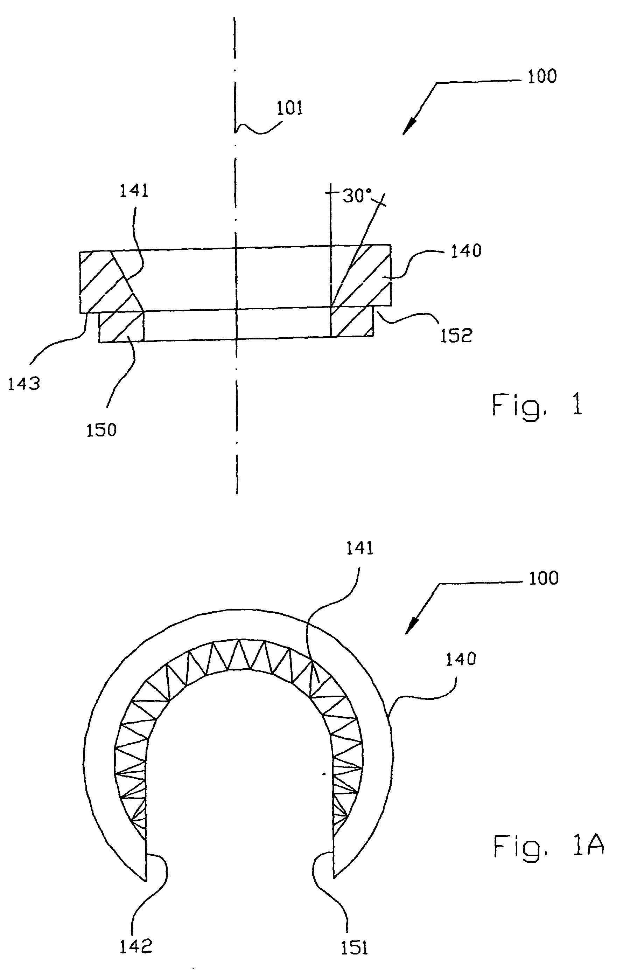

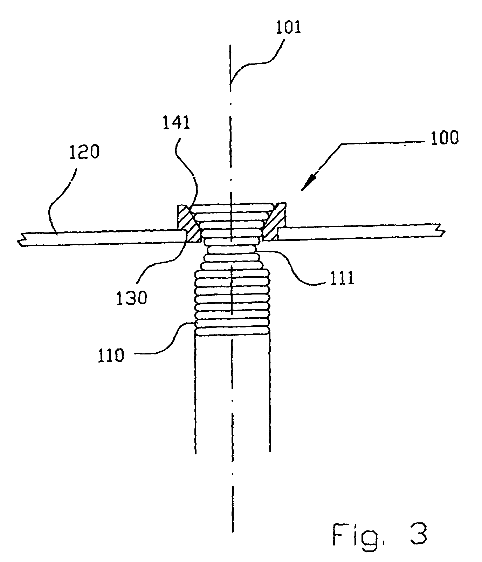

Die in Figuren 1 und 3 dargestellte erfindungsgemäße Halterungs-Vorrichtung 100 zum lösbaren Befestigen eines Trompetenendes 111 einer helixförmigen Zugfeder 110 an einer in einer Platte 120 ausgebildeten Bohrung 130 enthält einen mit einer hohlkonischen Innenfläche 141 ausgebildeter und mit einer seitlichen Öffnung 142 versehener Ring 140, wobei der Ring 140 an einer Stirnfläche 143 eine Einrasteinrichtung 150 aufweist, mittels derer er in die in einer Platte 120 ausgebildete Bohrung 130 lösbar einsetzbar ist. Die Einrasteinrichtung 150 ist dabei als mit einer seitlichen Öffnung 151 versehene hohlzylindrische Verlängerung des hohlkonischen Ringes 140 ausgebildet, die unter Bildung eines von der Stirnfläche 143 gebildeten Absatzes 152 an der Stirnfläche 143 des hohlkonischen Ringes 140 vorgesehen ist, wobei die als hohlzylindrische Verlängerung ausgebildete Einrasteinrichtung 150 einstückig mit dem hohlkonischen Ring 140 ausgebildet ist.

Die hohlkonischen Innenfläche 141 ist in einem Winkel von 30° zur Längsachse 101 der Vorrichtung 100 stehend angeordnet.

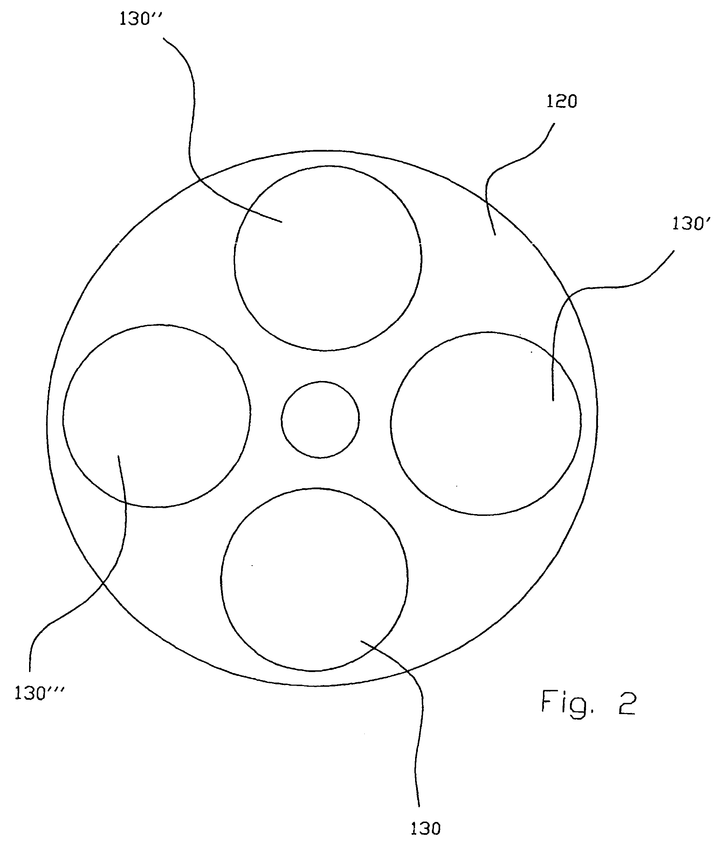

Fig. 2 zeigt eine mit einer Mehrzahl von Bohrungen 130, 130', 130'', 130''' ausgebildete Platte 120' zur Verwendung mit der erfindungsgemäßen Vorrichtung in einer Draufsicht. Mittels einer derartigen Platte 120' ist es ermöglicht, eine Mehrzahl von mit entsprechenden Trompetenenden versehene helixförmige Zugfeder parallel ausgerichtet einzuspannen.

Mit Hilfe der Halterungs-Vorrichtung 100 zum lösbaren Befestigen eines Trompetenendes 111 einer helixförmigen Zugfeder 110 ist über die Einrasteinrichtung 150 gewährleistet, dass eine oder mehr Zugfedern lösbar in eine jeweilige in einer Platte ausgebildeten Bohrung 130 bis 130''' einsetzbar ist, ohne dass die Bohrungen 130 bis 130''' der Platte 120' dazu einer gesonderten Ausgestaltung bedürften.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Halterungs-Vorrichtung zum lösbaren Befestigen eines Trompetenendes einer helixförmigen Zugfeder an einer in einer Platte ausgebildeten Bohrung, **dadurch gekennzeichnet, dass** die Vorrichtung als mit einer hohlkonischen Innenfläche ausgebildeter, mit einer seitlichen Öffnung versehener Ring ausgebildet ist, wobei der Ring an einer seiner Stirnflächen eine Einrasteinrichtung aufweist, mittels derer er in eine in einer Platte ausgebildeten Bohrung lösbar einsetzbar ist.

2. Vorrichtung nach Anspruch 1, **dadurch gekennzeichnet, dass** die Einrasteinrichtung als mit einer seitlichen Öffnung versehene hohlzylindrische Verlängerung des hohlkonischen Ringes ausgebildet ist, die unter Bildung eines Absatzes an einer Stirnseite des hohlkonischen Ringes vorgesehen ist.

3. Vorrichtung nach Anspruch 2, **dadurch gekennzeichnet, dass** die hohlzylindrische Verlängerung einstückig mit dem hohlkonischen Ring ausgebildet sind.

4. Vorrichtung nach einem der vorhergehenden Ansprüche, **dadurch gekennzeichnet, dass** die hohlkonischen Innenfläche in einem Winkel von 30° zur Längsachse der Vorrichtung stehend angeordnet ist.

5. Vorrichtung nach einem der vorhergehenden Ansprüche, **dadurch gekennzeichnet, dass** die Vorrichtung aus einem Metall hergestellt ist.

6. Vorrichtung nach Anspruch 5, **dadurch gekennzeichnet, dass** die Vorrichtung aus nicht rostendem Stahl hergestellt ist.

## Claims

1. A holding device for releasably securing a bell-shaped end of a helical tension spring in a bore provided in a plate, **characterized in that** the device is in the form of a ring having a hollow conical inner surface and provided with a lateral opening, which ring exhibits engaging means on one of its faces, by means of which the ring can releasably engage a bore provided in a plate.

2. A device as defined in claim 1, **characterized in that** the engaging means comprises a hollow cylindrical extension of the hollow conical ring and is provided with a lateral opening, which extension is disposed on one face of the hollow conical ring to form a shoulder therewith.

3. A device as defined in claim 2, **characterized in that** the hollow cylindrical prolongation forms an integral part of the hollow conical ring.

4. A device as defined in any one of the previous claims, **characterized in that** the hollow conical inner surface is at an angle of 30 ° to the longitudinal axis of the device.

5. A device as defined in any one of the previous claims, **characterized in that** it is made of metal.

6. A device as defined in claim 5, **characterized in that** it is made of stainless steel.

## Revendications

1. Dispositif d'attache pour fixer de façon détachable une extrémité évasée d'un ressort de traction en forme d'hélice dans un alésage réalisé dans une plaque,
**caractérisé en ce que** le dispositif 100 est réalisé sous la forme d'un circlip 140 formé avec une surface intérieure en cône creux 141 et muni d'une ouverture latérale 142, le circlip 140 présentant, sur l'une de ses surfaces frontales 143, une encoche 150 permettant de l'insérer de façon détachable dans un alésage 130 réalisé dans une plaque 120.

2. Dispositif selon la revendication 1,
**caractérisé en ce que** l'encoche 150 est réalisée sous la forme d'un prolongement cylindrique creux du circlip en cône creux 140, menu d'une ouverture latérale 151, prévu sur une surface frontale 143 du circlip en cône creux 140 en formant un épaulement 152.

3. Dispositif selon la revendication 2,
**caractérisé en ce que** le prolongement cylindrique creux est formé en une seule pièce avec le circlip en cône creux 140.

4. Dispositif selon l'une quelconque des revendications préalables,
**caractérisé en ce que** la surface intérieure en cône creux 141 est disposée à un angle de 30 ° par rapport à l'axe longitudinal du dispositif 100.

5. Dispositif selon l'une quelconque des revendications préalables,
**caractérisé en ce que** le dispositif est réalisé à partir d'un métal.

6. Dispositif selon la revendication 2,
**caractérisé en ce que** le dispositif est réalisé à partir d'acier inox.
